# EUROPEAN PATENT APPLICATION

(11) **EP 2 940 233 A1**
(43) Date of publication of application: **04.11.2015**
(21) Application number: 12891169.0
(22) Date of filing: 26.12.2012
(51) Int. Cl.: E05B 49/00

(54) **POWER CONSUMPTION SUPPRESSING DEVICE FOR ELECTRONIC KEY TERMINAL AND POWER CONSUMPTION SUPPRESSING METHOD FOR ELECTRONIC KEY TERMINAL**

(71) Applicant: TOYOTA JIDOSHA KABUSHIKI KAISHA, Toyota-shi, Aichi-ken, 471-8571 (JP)
(72) Inventor: HANAOKA, Kensuke, Toyota-shi Aichi 471-8571 (JP)
(74) Representative: Intès, Didier Gérard André
(86) International application number: PCT/JP2012/083608
(87) International publication number: WO 2014/102925

(57) **Abstract**

Provided is a power consumption suppressing device for electronic key terminals capable of effectively suppressing electronic key terminal power consumption. An electronic key terminal (200) comprises a charge state detection unit (210) to specify a charging point where a storage battery (203) can be charged. Moreover, the electronic key terminal (200) comprises a power consumption suppression unit (240) to suppress power consumption by the electronic key terminal (200) on the condition of the specified charging point not being contained in an arrival point and a destination of a vehicle (100).

## Description

### TECHNICAL FIELD

The present invention relates to a power consumption suppressing device for an electronic key terminal used as a vehicle key and to a power consumption suppressing method for an electronic key terminal.

### BACKGROUND ART

In recent years, smart key entry systems, which are capable of locking/unlocking doors of vehicles without using mechanical keys, have been widely used. In the smart key entry systems, when a user carrying an electronic key approaches the vehicle, an on-vehicle device collates the ID code of the electronic key. As a result of the collation, when validity of the electronic key is authorized, the doors of the vehicle can be locked or unlocked without performing an opening/closing operation through insertion of a mechanical key into a cylinder lock of the vehicle.

Further, at an authentication, the electronic key receives a request signal transmitted by the on-vehicle device. When receiving the request signal, the electronic key transmits a response signal including the ID code to the on-vehicle device. The on-vehicle device receives the response signal, and it is determined whether an ID code registered in advance and the ID code included in the response signal match with each other. In such a manner, the collation is performed.

In contrast, since the electronic key transmits/receives signals to/from the on-vehicle device, the remaining level of the rechargeable battery contained in the electronic key gradually is reduced. When the remaining level of the rechargeable battery is decreased to be less than a predetermined value, the door lock of the vehicle cannot be locked or unlocked and an engine cannot be started by using the electronic key.

Therefore, for example, in a communication control system for a vehicle described in Patent Document 1, when the remaining level of the rechargeable battery is decreased to a predetermined value or less, a transmission interval of response/request signals to be transmitted by the electronic key at a time of wireless communication with the on-vehicle device is set to be longer than a preset transmission interval.

### PRIOR ART DOCUMENT

### Patent Document

Patent Document 1: Japanese Laid-Open Patent Publication No. 2009-275427

### SUMMARY OF THE INVENTION

### Problems that the Invention is to Solve

The electronic key often consumes the electric power also when the wireless communication with the on-vehicle device is not made. Particularly, recent electronic keys are frequently configured to have multiple functions, or configured as an information terminal having an electronic key, and opportunities of consuming the electric power are increasing. For this reason, when the remaining level of the rechargeable battery of the electronic key is decreased when a user is not on the vehicle, authentication using the electronic key cannot be carried out, and the doors cannot be locked or unlocked by using the electronic key.

The electronic key terminal described above in the Technical Field section is a general term of an electronic key that functions also as a mechanical key conforming to a cylinder lock provided in the vehicle, and an electronic key configured to have multiple kinds of functions, and an information terminal having an electronic key function.

Accordingly, it is an objective of the present invention to provide a power consumption suppressing device for an electronic key terminal that enables effective suppression of power consumption of an electronic key terminal, and a power consumption suppressing method for then electronic key terminal.

### Means for Solving the Problems

Means for achieving the above objective and advantages thereof will now be discussed.

To achieve the foregoing objective and in accordance the present invention, a power consumption suppressing device for an electronic key terminal is provided. The device suppresses power consumption of an electronic key terminal that communicates with an on-vehicle device mounted on a vehicle. The power consumption suppression device includes a charging point identifying section that identifies a charging point as a spot where a rechargeable battery of the electronic key terminal can be charged and a power consumption suppressing section that suppresses power consumption of the electronic key terminal provided that the identified charging point is not included in any of a reached location and a destination of the vehicle and a route to the destination.

In accordance with the present invention, a power consumption suppressing method for an electronic key terminal that communicates with an on-vehicle device mounted on a vehicle is also provided. The method includes: an identifying step for identifying as a charging point a spot where a rechargeable battery of the electronic key terminal can be charged; and a suppressing step for suppressing the power consumption of the electronic key terminal provided that the identified charging point is not included in any of a reached location and a destination of the vehicle and a route to the destination.

Even when the power of a rechargeable battery of the electronic key terminal is consumed, the suppression of the power consumption is not much needed under a circumstance in which the rechargeable battery can be charged. In contrast, since it is difficult to recover the rechargeable battery of which the remaining level has been decreased under a circumstance in which the rechargeable battery cannot be charged, suppression of the power consumption is much needed.

In the above configuration or the method, therefore, the power consumption of the electronic key terminal is suppressed based on whether a charging point, at which the rechargeable battery can be charged, is included in any of a reached location and a destination of the vehicle and a route to the destination. That is, when a charging point is not present on any of the reached location, the destination, and the route to the destination, the rechargeable battery cannot be charged at the position of the vehicle, and thus the rechargeable battery of which the remaining level has been decreased cannot be recovered. Therefore, when the power consumption is suppressed under a condition in which no charging point is present on any of the reached location and the destination of the vehicle and the route to the destination, the decrease of the remaining level of the rechargeable battery is suppressed under a circumstance in which the charging of the rechargeable battery is difficult. For this reason, before the remaining level of the rechargeable battery is decreased, the power consumption is suppressed. For this reason, the power consumption of the electronic key terminal is properly suppressed.

In accordance with one aspect of the present invention, the power consumption suppressing device for an electronic key terminal further includes a charging history management section for relating a charging history of the rechargeable battery to spot where the charging was carried out, thereby managing the charging history. The charging point identifying section identifies as a charging point a spot where a number of times of charging of the rechargeable battery that is calculated based on the charging history is greater than or equal to a prescribed number.

In accordance with one aspect of the present invention, the power consumption suppressing method for an electronic key terminal further includes a management step for relating a charging history of the rechargeable battery to spot where the charging was carried out, thereby managing the charging history. At the identifying step, a spot where a number of times of charging of the rechargeable battery calculated based on the charging history is greater than or equal to a prescribed number of times or more is identified as the charging point.

According to the above configuration, a charging history of the rechargeable battery is related to spots where the charging was carried out to be managed. For this reason, a spot where the charging is possible is identified based on whether the charging was actually carried out. When a spot where the rechargeable battery was charged for a predetermined number of times or more has high reliability as a spot where the rechargeable battery can be charged. In the above configuration, therefore, the number of times of charging of the rechargeable battery is calculated based on the charging history. When spots where the calculated number of times of charging is greater than or equal to a prescribed number of times are identified as charging points. For this reason, spots where the charging was actually carried out and that have high reliability as chargeable spots are identified as charging points. As a result, the accuracy of the identification of charging points is heightened.

In accordance with one aspect of the present invention, when the number of times of charging on a spot included in the reached location and the destination of the vehicle and the route to the destination is less than a predetermined number of times, the power consumption suppressing section suppresses the power consumption of the electronic key terminal.

At spots where the number of times of charging is less than the predetermined number of times based on the charging history, the probability that the rechargeable battery cannot be charged is high. In the above configuration, therefore, when the number of times of charging is less than the predetermined number of times, it is determined that the rechargeable battery cannot be charged even if the remaining level of the rechargeable battery is decreased, and thus the power consumption is suppressed. As a result, the power consumption is appropriately suppressed under the circumstance where the charging of the rechargeable battery is difficult.

In accordance with one aspect of the present invention, the charging point identifying section identifies as a hub of the vehicle a spot where the number of times of charging calculated based on the charging history is maximum.

For example, the home and the working place of the user of the vehicle and the electronic key terminal are hubs of the vehicle, and the electronic key terminal tends to be stably charged there. Further, the electronic key terminal is frequently charged at the hubs.

In the above configuration, therefore, a spot, at which the number of times of charging is maximum, is identified as the hub of the vehicle. When the charging points including this hub are included in at least one of the reached location and destination of the vehicle and a route to the destination, the rechargeable battery is assumed to be able to be charged, and thus the power consumption is not suppressed. Therefore, the identified hub can be used as a charging point with higher reliability.

In accordance with one aspect of the present invention, the electronic key terminal is a mobile terminal having a phone function and a communication function, and the power consumption suppressing section brings at least one of the phone function and the communication function of the mobile terminal from an ON state into an OFF state to suppress the power consumption.

Recent electronic key terminals are mostly configured as mobile terminals having a phone function and a communication function. On the other hand, in such electronic key terminals, the power consumption is large due to the phone function and the communication function. For this reason, the remaining level of the rechargeable battery of the electronic key terminal is decreased except when the electronic key terminal is used for control such as locking of the doors of the vehicle.

In the above configuration, the mobile terminal having the phone function and the communication function is used as the electronic key terminal. At least one of the phone function and the communication function of the mobile terminal is brought into an OFF state so that the power consumption is suppressed. For this reason, the power consumption of the rechargeable battery of the mobile terminal is suppressed. As a result, the remaining level of the rechargeable battery of the mobile terminal is easily maintained at a predetermined value or higher, and thus the function as the electronic key is reliably maintained.

In accordance with one aspect of the present invention, when the reached location of the vehicle is not a charging point, the power consumption suppressing section suppresses the power consumption of the electronic key terminal after the electronic key terminal locks the doors of the vehicle or after an engine of the vehicle is stopped.

When the reached location of the vehicle is a charging point, the electronic key terminal can be charged at the reached location. On the contrary, when the reached location of the vehicle is not a charging point, the electronic key terminal cannot be charged at the reached location, and when the remaining level is decreased to a predetermined value or lower, the electronic key terminal cannot function as the electronic key. Therefore, when the reached location of the vehicles is not a charging point, the power consumption of the electronic key terminal is much needed after the user gets out of the vehicle in order to secure the remaining level of the battery at a time of using as the electronic key when the user gets in the vehicle.

In the above configuration, the power consumption is suppressed based on whether the reached location of the vehicle is a charging point after the door lock of the vehicle is locked or the engine of the vehicle is shut down by the electronic key terminal, namely, under a circumstance where the user is predicted to get out of the vehicle. For this reason, when the reached location of the vehicle is not a charging point, it is urged that the remaining level of the rechargeable battery be maintained at a constant value or more through suppression of the power consumption. Therefore, when the user again gets in the vehicle and the electronic key terminal is used, it is urged that the remaining level of the rechargeable battery be maintained at the constant value or more.

In accordance with one aspect of the present invention, when the charging point is not included in at least one of the destination of the vehicle and the route to the destination, the power consumption suppressing section suppresses the power consumption of the electronic key terminal used in the vehicle.

When the destination of the vehicle is a charging point, the electronic key terminal can be charged at the destination. On the contrary, when the destination of the vehicle is not a charging point, the electronic key terminal cannot be charged at the destination, and when the remaining level is decreased to the predetermined value or less, the electronic key terminal cannot function as the electronic key. Therefore, when the destination of the vehicle is not a charging point, suppression of the power consumption of the electronic key terminal is much needed until the arrival at the destination in order to secure the remaining level of the battery at the time of using as the electronic key when the user who has arrived at the destination again gets in the vehicle.

In the above configuration, the power consumption is suppressed based on whether the destination of the vehicle is a charging point after the door lock of the vehicle is locked or the engine of the vehicle is shut down by the electronic key terminal, namely, under the circumstance where the user is predicted to get out of the vehicle. For this reason, when the destination of the vehicles is not a charging point, it is urged that the remaining level of the rechargeable battery be maintained at a constant value or more. Therefore, also when the user who got out of the vehicle at the destination again gets in the vehicle, and the electronic key terminal is used at the time when the user gets in the vehicle, it is urged that the remaining level of the rechargeable battery be maintained at the constant value or more through suppression of the power consumption.

### BRIEF DESCRIPTION OF THE DRAWINGS

Fig. 1 is a block diagram schematically illustrating configurations of an electronic key terminal and a vehicle using the electronic key terminal to which a power consumption suppressing device for an electronic key terminal and a power consumption suppressing method for an electronic key terminal are applied according to one embodiment of the present invention.
Fig. 2 is a flowchart illustrating one example of a procedure for suppressing power consumption of the rechargeable battery of the electronic key terminal after parking of the vehicle.
Fig. 3 is a flowchart illustrating one example of a procedure for suppressing power consumption of the rechargeable battery of the electronic key terminal during running of the vehicle.
Fig. 4 is a diagram schematically illustrating whether the power consumption of the electronic key terminal is suppressed at a time of moving to each spot.

### MODES FOR CARRYING OUT THE INVENTION

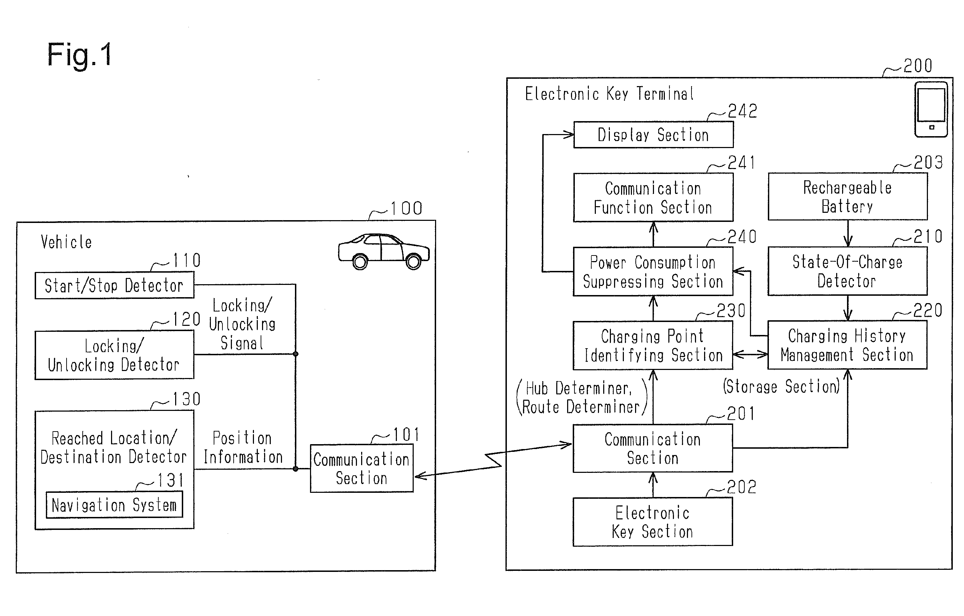

The following describes a power consumption suppressing device for an electronic key terminal and a power consumption suppressing method for an electronic key terminal according to one embodiment of the present invention with reference to Figs. 1 to 4.

As shown in Fig. 1, a vehicle 100, to which the power consumption suppressing device for an electronic key terminal and the power consumption suppressing method for an electronic key terminal according to this embodiment are applied, has a start/stop detector 110 for detecting an operation start and an operation stop of the engine of the vehicle 100. Further, the vehicle 100 has a locking/unlocking detector 120 for detecting locking and unlocking of the doors of the vehicle 100. Further, the vehicle 100 has a reached location/destination detector 130 for detecting information about the reached location and the destination of the vehicle 100.

The start/stop detector 110 detects the operation starting of the engine of the vehicle 100, namely, the starting of the engine for example, based on input of a signal for requesting the start of the operation by an electronic key terminal 200 from a communication section 101. Further, the start/stop detector 110 obtains spot information representing latitude and longitude of the vehicle 100 at a time of detecting the start of the engine. The start/stop detector 110 obtains spot information based on, for example, a detected result of a GPS provided to the vehicle 100.

On the other hand, the start/stop detector 110 detects operation stop of the operation of the engine of the vehicle 100, namely, the stop of the engine based on, for example, input of a signal for requesting the stop of the operation of the engine by the electronic key terminal 200 from the communication section 101. Further, the start/stop detector 110 obtains the spot information representing the latitude and longitude of the vehicle 100 at a time of detecting the stop of the operation of the engine.

The locking/unlocking detector 120 detects locking of the doors based on, for example, input of a signal for requesting door lock by the electronic key terminal 200 from the communication section 101. Further, the locking/unlocking detector 120 obtains spot information representing the latitude and longitude of the vehicle 100 at a time of detecting the locking of the doors.

On the other hand, the locking/unlocking detector 120 detects unlocking of the doors based on, for example, input of a signal for requesting unlocking of the doors by the electronic key terminal 200 from the communication section 101. Further, the locking/unlocking detector 120 obtains spot information representing the latitude and longitude of the vehicle 100 at a time of detecting the unlocking of the doors.

The reached location/destination detector 130 detects whether the vehicle 100 has arrived at the reached location as a spot where the vehicle 100 is to be parked. The reached location/destination detector 130 obtains spot information at a time when the start/stop detector 110 detects the stop of the operation of the engine and the locking/unlocking detector 120 detects the locking of the doors as the information about the reached location. The reached location/destination detector 130 transmits the obtained information about the reached location to the electronic key terminal 200 via the communication section 101.

A spot where the vehicle is stopped and parked is the reached location, and a spot where the vehicle in a stopping or running state will be heading is the destination.

Further, the reached location/destination detector 130 obtains the information about the destination of the vehicle 100. The reached location/destination detector 130 obtains information representing latitude and longitude of the destination of the vehicle 100 based on, for example, the destination set by a navigation system 131. The reached location/destination detector 130 transmits the obtained information representing the latitude and longitude of the destination to electronic key terminal 200 via the communication section 101.

The electronic key terminal 200 is a mobile information terminal carried by an occupant of the vehicle 100, and is composed of an information terminal such as a smart phone. That is, the electronic key terminal 200 has a communication function section 241 connectable to an internetwork, and a display section 242 on which various pieces of information is displayed.

The electronic key terminal 200 has a communication section 201 for communication with the communication section 101 of the vehicle 100, and an electronic key section 202 for switching between the locking and the unlocking of the doors of the vehicle 100 and between the stop of the operation of the engine and the stop of the operation.

Further, the electronic key terminal 200 according to this embodiment has a state-of-charge detector 210 for detecting the state of charge of the electronic key terminal 200, and a charging history management section 220 for managing the charging history as a history relating to the charging of the electronic key terminal 200.

Further, the electronic key terminal 200 has a charging point identifying section 230 for identifying a charging point as a spot where the electronic key terminal 200 was charged, and a power consumption suppressing section 240 for suppressing the power consumption of the electronic key terminal 200.

The state-of-charge detector 210 detects the charge remaining level of a rechargeable battery 203 provided to the electronic key terminal 200. The state-of-charge detector 210 outputs information representing the detected charge remaining level to the power consumption suppressing section 240.

Further, the state-of-charge detector 210 monitors whether the rechargeable battery 203 is being charged. When the state-of-charge detector 210 detects that the charging of the rechargeable battery 203 has been started, it outputs information representing the start of the charging to the charging history management section 220.

The state-of-charge detector 210 detects that, for example, the charge remaining level of the rechargeable battery 203 has increased or the electronic key terminal 200 has been connected to a charging device, to detect that the charging of the rechargeable battery 203 has been started.

When receiving information representing the start of the charging, the charging history management section 220 obtains information representing the spot where the charging of the rechargeable battery 203 was started from the vehicle 100 via the communication section 201. The charging history management section 220 sets the spot where the charging of the rechargeable battery 203 was started as the reached location of the vehicle 100 at the time when the charging of the rechargeable battery 203 was started. That is, the charging history management section 220 determines that the vehicle 100 arrived at a spot where the rechargeable battery 203 of the electronic key terminal 200 can be charged and the user of electronic key terminal 200, who got out of the vehicle 100, has started the charging. The charging history management section 220 identifies a spot where the charging of the rechargeable battery 203 is started each time the charging of the rechargeable battery 203 is detected, and counts the number of times of charging at each spot. The number of times of charging counted at each spot becomes the charging history of the rechargeable battery 203.

The charging point identifying section 230 identifies charging points as spots where the rechargeable battery 203 can be charged based on the charging history recorded by the charging history management section 220. The charging point identifying section 230 identifies spots where charging has been carried out for a prescribed number of times or more, for example, as charging points. Further, the charging point identifying section 230 identifies, for example, a spot where the number of times of charging is the largest in the identified charging points as a hub of the vehicle 100, such as the home of the user of the electronic key terminal 200.

The power consumption suppressing section 240 obtains information about the reached location or the destination detected by the reached location/destination detector 130 of the vehicle 100 via the communication section 201. The power consumption suppressing section 240 determines whether the reached location or destination represented by the obtained information is included in the charging points identified by the charging point identifying section 230. When any of the reached location and destination represented by the obtained information is not included in the charging points, the power consumption suppressing section 240 suppresses the power consumption of the rechargeable battery 203.

The power consumption suppressing section 240 according to this embodiment, for example, changes the communication through the communication function section 241, which operates using the rechargeable battery 203 as a power source, from an ON state into an OFF state. Further, the power consumption suppressing section 240 lowers the luminance of the display view displayed by the display section 242 to a level lower than a prescribed value. As a result, when neither the reached location nor the destination of the vehicle 100 is included in the charging points, the power consumption of the rechargeable battery 203 is suppressed.

Even while the power consumption is being suppressed, the power consumption suppressing section 240 allows communication that is performed when the electronic key section 202 locks or unlocks the doors of the vehicle 100 and the operation of the engine is started and stopped.

In contrast, when either the reached location or the destination of the vehicle 100 is included in the charging points, the power consumption suppressing section 240 does not intervene in the suppression of the power consumption. Even in this state, the setting can be changed by the user to change the communication of the communication function section 241 from the ON state into the OFF state, or to lower the luminance of the display view to be displayed by the display section 242 to a level lower than the prescribed value.

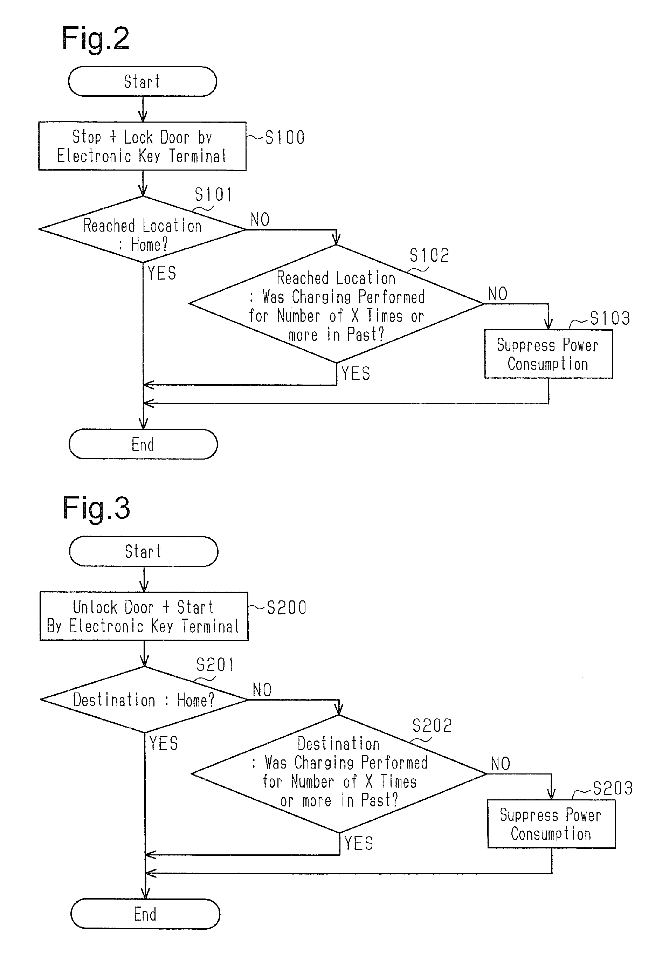

Operation of the present embodiment will be described with reference to Figs. 2 and 3.

As shown in Fig. 2, when the electronic key terminal 200 detects at step S100 that the engine of the vehicle 100 has stopped and the doors have been locked, stoppage of the vehicle 100 stops and arrives at a certain spot are detected.

A determination is then made whether the reached location of the vehicle 100 is the hub of the vehicle 100 such as the home (step S101). When it is determined that the reached location of the vehicle 100 is the home (step S101: YES), the power consumption suppressing section 240 does not suppress the power consumption and the process is ended. That is, the power consumption suppressing section 240 does not suppress the power consumption of the rechargeable battery 203 because the reached location of the vehicle 100 is the home and is a spot where the rechargeable battery 203 can be charged.

Further, when it is determined that the reached location of the vehicle 100 is not the home (step S101: NO), it is determined whether the reached location of the vehicle 100 is a spot where the charging was carried out at a prescribed number of times or more in the past, namely, a charging point (step S102).

When it is determined that the reached location of the vehicle 100 is a charging point (step S102: YES), the power consumption suppressing section 240 does not suppress the power consumption, and the process is ended.

In contrast, when it is determined that the reached location of the vehicle 100 is not a charging point (step S102: NO), the power consumption suppressing section 240 suppresses the power consumption of the rechargeable battery 203 (step S103). That is, the power consumption suppressing section 240 determines that the power consumption of the rechargeable battery 203 should be suppressed because the rechargeable battery 203 cannot be charged at the spot at which the vehicle 100 has arrived. As a result, the communication function of the communication function section 241 of the electronic key terminal 200 is changed from an ON state into an OFF state, and the power consumption of the rechargeable battery 203 is suppressed. Further, the luminance of the display view on the display section 242 is reduced to be lower than the prescribed value, and the power consumption of the rechargeable battery 203 is suppressed.

Steps S101 and S102 in Fig. 2 correspond to the above identifying steps, and step S103 corresponds to the above suppressing step.

Further, as shown in Fig. 3, when the electronic key terminal 200 is used in the vehicle 100, the electronic key terminal 200 has unlocked the doors of the vehicle 100 and the start of the engine is detected, a detection is made that the vehicle 100 has started to run, and is heading for a certain destination (step S200).

It is then determined whether the destination of the vehicle 100 is a hub of the vehicle 100, such as the home (step S201). When the destination of the vehicle 100 is the home (step S201: YES), the power consumption suppressing section 240 does not suppress the power consumption and the process is ended. That is, the power consumption suppressing section 240 does not suppress the power consumption of the rechargeable battery 203 because the destination of the vehicle 100 is the home and is a spot where the rechargeable battery 203 can be charged.

Further, when it is determined that the destination of the vehicle 100 is not the home (step S201: NO), it is determined whether the destination of the vehicle 100 is a spot where charging was carried out for a prescribed number of times or more in the past, namely, a charging point (step S202).

When it is determined that the destination of the vehicle 100 is a charging point (step S202: YES), the power consumption suppressing section 240 does not suppress the power consumption, and the process is ended.

Since the rechargeable battery 203 can be charged at the destination of the vehicle 100, even if the remaining level of the rechargeable battery 203 is decreased during use of the electronic key terminal 200 in the vehicle 100, the rechargeable battery 203 is charged at the destination so that the doors can be locked by the electronic key section 202.

In contrast, when it is determined that the destination of the vehicle 100 is not a charging point (step S202: NO), the power consumption suppressing section 240 suppresses the power consumption of the rechargeable battery 203 (step S203). That is, since the rechargeable battery 203 cannot be charged at the destination of the vehicle 100, it is determined that the power consumption suppressing section 240 should suppress the power consumption of the rechargeable battery 203. As a result, the communication function of the communication function section 241 of the electronic key terminal 200 is changed from an ON state into an OFF state, and the power consumption of the rechargeable battery 203 is suppressed. Further, the luminance of the display view on the display section 242 is reduced to be lower than the prescribed value, and the power consumption of the rechargeable battery 203 is suppressed.

Steps S201 and S202 in Fig. 3 correspond to the above identifying steps, and step S203 corresponds to the above suppressing step.

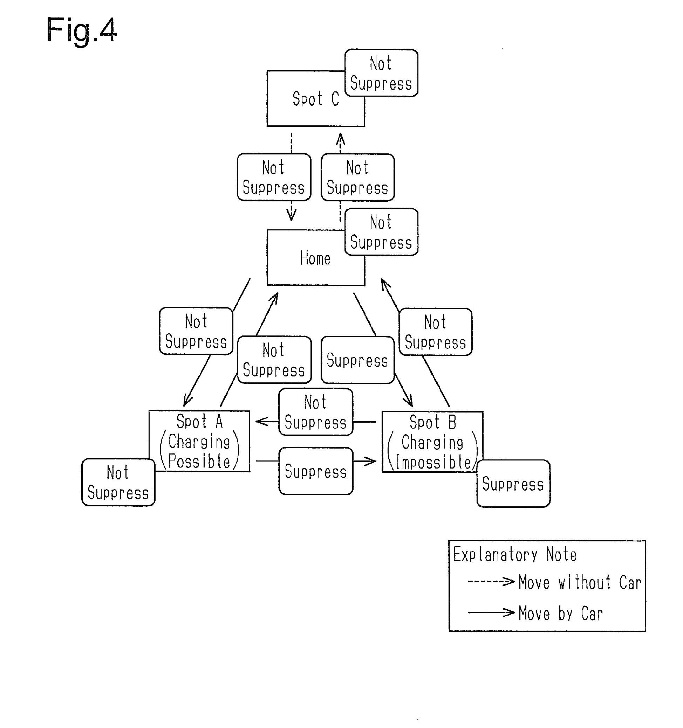

A manner of suppressing the power consumption through the power consumption suppressing device for an electronic key terminal and the power consumption suppressing method for an electronic key terminal according to this embodiment will be described below with reference to Fig. 4.

As shown in Fig. 4, for example, when the electronic key terminal 200 to be used in the vehicle 100 is moved between the home and a spot A as a charging point, the power consumption of the rechargeable battery 203 is not suppressed because the rechargeable battery 203 can be charged at both the home and the spot A.

Similarly, when the electronic key terminal 200 to be used in the vehicle 100 is moved from a spot B identified as not being a charging point to the home or the spot A, the power consumption of the rechargeable battery 203 is not suppressed.

On the other hand, when the electronic key terminal 200 to be used in the vehicle 100 is moved from the home or the spot A to the spot B where the charging is disabled, the power consumption of the rechargeable battery 203 is suppressed.

Further, for example, when the vehicle 100 is parked at the home, and the electronic key terminal 200 carried by the user who got out of the vehicle 100 is heading form the home for a spot C, the electronic key terminal 200 is not used as the electronic key at the spot C, and thus the power consumption of the rechargeable battery 203 is not suppressed.

Further, when the electronic key terminal 200 carried by the user who got out of the vehicle 100 is heading from the spot C for the home, the rechargeable battery 203 can be charged at the home, and thus the power consumption of the rechargeable battery 203 is not suppressed.

As described above, the power consumption suppressing device for an electronic key terminal and the power consumption suppressing method for an electronic key terminal according to this embodiment achieve the following advantages.
(1) A charging point, where the rechargeable battery 203 of the electronic key terminal 200 can be charged, is identified. The power consumption of the electronic key terminal 200 is suppressed provided that the identified charging point is not included in the reached location and the destination of the vehicle 100. For this reason, the reduction in the remaining level of the rechargeable battery 203 is suppressed under a circumstance where the charging of the rechargeable battery 203 is difficult. Therefore, before the remaining level of the rechargeable battery 203 is decreased, the power consumption is suppressed. As a result, the power consumption of the electronic key terminal 200 is appropriately suppressed.
(2) The charging history of the rechargeable battery 203 is related to the spots where the charging is carried out to be managed. A spot where the number of times of charging of the rechargeable battery 203 calculated based on the charging history is the prescribed number of times or more is identified as a charging point. For this reason, a spot where the charging was actually carried out and that has high reliability as a chargeable spot is identified as a charging point. As a result, accuracy of the identification of charging points is heightened.
(3) When the number of times of charging is less than the predetermined number of times at a spot included in the reached location and the destination of the vehicle 100, the power consumption of the electronic key terminal 200 is suppressed. For this reason, when the number of times of charging is less than the predetermined number of times, the rechargeable battery 203 cannot be charged even if the remaining level of the rechargeable battery 203 is decreased, and thus the power consumption is suppressed. As a result, the power consumption is appropriately suppressed under the circumstance where the charging of the rechargeable battery 203 is difficult.
(4) A spot where the number of times of charging based on the charging history is the largest is identified as a hub of the vehicle 100. Therefore, the identified hub can be used as a charging point with higher reliability.
(5) The electronic key terminal 200 is composed of a mobile terminal having the communication function. The communication function of the communication function section 241 is changed from the ON state into the OFF state so that the power consumption is suppressed. Further, the luminance of the display view on the display section 242 is lowered to a level lower than the prescribed value so that the power consumption is suppressed. For this reason, even when the power consumption is easily increased because the electronic key terminal 200 has a function other than the function of the electronic key, the remaining level of the rechargeable battery 203 is easily maintained at a predetermined level or higher, and the function as the electronic key is suitably maintained.
(6) After the electronic key terminal 200 locks the doors of the vehicle 100 and the engine of the vehicle 100 stops, the power consumption of the electronic key terminal 200 is suppressed based on whether the reached location of the vehicle 100 is a charging point. For this reason, when the reached location of the vehicle 100 is not a charging point, it is urged that the remaining level of the rechargeable battery 203 be maintained at a constant value or more. That is, before the remaining level of the rechargeable battery 203 is decreased, the power consumption is suppressed so that the remaining level of the rechargeable battery 203 is preserved. Therefore, also when the user again gets in the vehicle 100 and the electronic key terminal 200 is used as the electronic key, it is urged that the remaining level of the rechargeable battery 203 be maintained at the constant value or more through suppression of the power consumption.
(7) The power consumption of the electronic key terminal 200 to be used in the vehicle 100 is suppressed based on whether a charging point is included in the destination of the vehicle 100. For this reason, when the destination of the vehicle 100 is not a charging point, it is urged that the remaining level of the rechargeable battery 203 be maintained at a constant value or more. Therefore, also when the user who got off at the destination again gets in the vehicle 100 and the electronic key terminal 200 is used as the electronic key, it is urged that the remaining level of the rechargeable battery 203 be maintained at a constant value or more through suppression of the power consumption.

The above embodiment may be modified as follows.

The start/stop detector 110 detects the start of operation and the stop of operation of the engine based on a signal transmitted from the electronic key terminal 200. Not limited to this, the start/stop detector 110 may detect the start/stop of the engine based on, for example, switching between ON and OFF of the accessory position of the vehicle 100. Further, the start/stop detector 110 may detect the start/stop of the engine based on, for example, a control signal of a control device for controlling the engine of the vehicle 100. Further, a method for detecting the start/stop of the engine can be changed as necessary.

The locking/unlocking detector 120 detects the locking/unlocking of the doors based on the signal to be transmitted from the electronic key terminal 200. Not limited to this, the locking/unlocking detector 120 can detect the locking/unlocking of the doors based on, for example, a control signal of the control device for controlling the locking/unlocking of the doors. Further, the method for detecting the locking/unlocking of the doors can be changed as necessary.

Arrival of the vehicle 100 arrives at the reached location is determined based on the detection of the stop of the engine and the locking of the doors. Not limited to this, arrival of the vehicle 100 at the reached location may be determined based on the detection of any one of the stop of the engine and the locking of the doors. Further, arrival of the vehicle 100 at the reached location may be determined based on, for example, information that the running speed of the vehicle 100 has been 0 continuously for a predetermined time, the latitude and longitude of the GPS have not changed continuously for a predetermined time, and the emergency brake has been operated.

Departure of the vehicle 100 for the destination is determined based on detection of the unlocking of the doors and the start of the engine. Not limited to this, departure of the vehicle 100 for the destination may be determined based on detection of any one of the unlocking of the doors and the start of the engine. Further, departure of the vehicle 100 for the destination may be determined based on, for example, that the running speed of the vehicle 100 has change to exceed 0, the latitude and longitude of GPS has changed, and the emergency brake has been operated.

Information representing the reached location of the vehicle 100 and the latitude and longitude of the destination is obtained by the GPS mounted to the vehicle 100. Not limited to this, when the electronic key terminal 200 is equipped with a GPS, the latitude and longitude of the reached location of the vehicle 100 may be obtained by the GPS. As a result, the latitude and longitude of the charging point and the reached location of the vehicle 100 are identified based on the information representing the latitude and longitude of the electronic key terminal 200 obtained by the GPS.

The power consumption suppressing section 240 suppresses the power consumption based only on whether the destination and the reached location of the vehicle 100 are charging points. Further, the power consumption suppressing section 240 may suppress the power consumption based on whether the destination and the reached location of the vehicle 100 are charging points, provided that the remaining level of the rechargeable battery 203 reduced to be lower than a prescribed value.

The power consumption suppressing section 240 identifies the destination of the vehicle 100 based on the destination of the vehicle 100 set by the navigation system 131. Not limited to this, when the electronic key terminal 200 has a route searching function, the power consumption suppressing section 240 may identify the destination of the vehicle 100 based on the destination identified through the searching function.

The power consumption suppressing section 240 executes a process as the suppression of the power consumption to turn off the communication function of the communication function section 241 of the electronic key terminal 200. Further, as the suppression of the power consumption, a process for reducing the luminance of the display view on the display section 242 to a value smaller than a prescribed value is executed. Not limited to this, the power consumption suppressing section 240 may execute any one of the process for turning off the communication function of the communication function section 241 of the electronic key terminal 200 and the process for reducing the luminance of the display view on the display section 242 to a value smaller than the prescribed value as the suppression of the power consumption. Further, when the electronic key terminal 200 has, for example, a phone function, the power consumption suppressing section 240 may execute a process for turning off the phone function of the electronic key terminal 200 as the suppression of the power consumption. Further, when the electronic key terminal 200 periodically sends an authentication signal, the electronic key terminal 200 may execute a process for relatively lengthening a transmission cycle of the authentication signal as the suppression of the power consumption. Alternatively, the method can be changed as long as the method enables the suppression of the power consumption of the rechargeable battery 203. Any method may be selected from the suppressing methods by the user of the electronic key terminal 200.

The electronic key terminal 200 is composed of a mobile information terminal having the communication function section 241 and the display section 242. Not limited to this, the electronic key terminal may be composed of a mechanical key, the communication section 201, and the electronic key section 202. Further, any electronic key terminal may be used as long as it can control the locking/unlocking of the doors of the vehicle 100 and the start/stop of the engine through communication.

The charging point identifying section 230 identifies a spot where the number of times of charging calculated based on the charging history is the maximum as a hub of the vehicle 100. Not limited to this, the charging point identifying section 230 may identify a spot where a sojourn time is the longest as a hub of the vehicle 100. The identified hub can be registered as, for example, an initial charging point into the electronic key terminal 200.

The charging point identifying section 230 identifies the hub of the vehicle 100. Not limited to this, the charging point identifying section 230 may be configured not to identify a hub of the vehicle 100.

A charging point may be an area within a predetermined range including the destination and the reached location.

The power consumption suppressing section 240 suppresses the power consumption based on whether a charging point is included in the reached location and the destination of the vehicle 100. Further, for example, when the navigation system 131 searches for a suggested route to the destination, the power consumption suppressing section 240 may suppress the power consumption based on whether a charging point is included in the suggested route.

The charging point identifying section 230 identifies a charging point based on the charging history recorded by the charging history management section 220. Not limited to this, the charging point identifying section 230 may have information in which the latitude and longitude of charging points are registered in advance, and may identify a charging point based on the information. Alternatively, the charging point identifying section 230 may identify charging points based on, for example, information distributed from a center.

### DESCRIPTION OF THE REFERENCE NUMERALS

100...vehicle, 101...communication section, 110...start/stop detector, 120...locking/unlocking detector, 130...reached location/destination detector, 131... navigation system, 200...electronic key terminal, 201 ...communication section, 202... electronic key section, 203...rechargeable battery, 210...state-of-charge detector, 220... charging history management section, 230...charging point identifying section, 240...power consumption suppressing section, 241 ...communication function section, 242...display section.

## Claims

1. A power consumption suppressing device for an electronic key terminal, wherein the device suppresses power consumption of an electronic key terminal that communicates with an on-vehicle device mounted on a vehicle, the power consumption suppression device comprising:
a charging point identifying section that identifies a charging point as a spot where a rechargeable battery of the electronic key terminal can be charged; and
a power consumption suppressing section that suppresses power consumption of the electronic key terminal provided that the identified charging point is not included in any of a reached location and a destination of the vehicle and a route to the destination.

2. The power consumption suppressing device for an electronic key terminal according to claim 1, further comprising a charging history management section for relating a charging history of the rechargeable battery to spot where the charging was carried out, thereby managing the charging history,
wherein the charging point identifying section identifies as a charging point a spot where a number of times of charging of the rechargeable battery, that is calculated based on the charging history, is greater than or equal to a prescribed number.

3. The power consumption suppressing device for an electronic key terminal according to claim 2, wherein, when the number of times of charging on a spot included in the reached location and the destination of the vehicle and the route to the destination is less than a predetermined number of times, the power consumption suppressing section suppresses the power consumption of the electronic key terminal.

4. The power consumption suppressing device for an electronic key terminal according to any one of claims 2 and 3, wherein the charging point identifying section identifies as a hub of the vehicle a spot where the number of times of charging calculated based on the charging history is maximum.

5. The power consumption suppressing device for an electronic key terminal according to any one of claims 1 to 4, wherein
the electronic key terminal is a mobile terminal having a phone function and a communication function, and
the power consumption suppressing section brings at least one of the phone function and the communication function of the mobile terminal from an ON state into an OFF state to suppress the power consumption.

6. The power consumption suppressing device for an electronic key terminal according to any one of claims 1 to 5, wherein, when the reached location of the vehicle is not a charging point, the power consumption suppressing section suppresses the power consumption of the electronic key terminal after the electronic key terminal locks the doors of the vehicle or after an engine of the vehicle is stopped.

7. The power consumption suppressing device for an electronic key terminal according to any one of claims 1 to 6, wherein, when the charging point is not included in at least one of the destination of the vehicle and the route to the destination, the power consumption suppressing section suppresses the power consumption of the electronic key terminal used in the vehicle.

8. A power consumption suppressing method for an electronic key terminal that communicates with an on-vehicle device mounted on a vehicle, the method comprising:
an identifying step for identifying as a charging point a spot where a rechargeable battery of the electronic key terminal can be charged; and
a suppressing step for suppressing the power consumption of the electronic key terminal provided that the identified charging point is not included in any of a reached location and a destination of the vehicle and a route to the destination.

9. The power consumption suppressing method for an electronic key terminal according to claim 8, further comprising a management step for relating a charging history of the rechargeable battery to spot where the charging was carried out, thereby managing the charging history,
wherein, at the identifying step, as the charging point a spot is identified, where a number of times of charging of the rechargeable battery calculated based on the charging history is greater than or equal to a prescribed number of times or more.
